# FASCICULE DE BREVET EUROPEEN

(11) **EP 0 559 579 B1**
(45) Date de publication et mention de la délivrance du brevet: **10.04.1996**
(21) Numéro de dépôt: 93420053.6
(22) Date de dépôt: 09.02.1993
(51) Int. Cl.: B60K 1/04, B60L 11/18

(54) **Installation permettant la manutention de produits à l'intérieur des zones de stockage d'un magasin automatisé**
Vorrichtung zum Bewegen von Produktion im Inneren von Stapelbereichen eines automatisierten Lagers
Device for moving products within storage areas of an automatic warehouse

(30) Priorité: 03.03.1992 FR 9202759
(43) Date de publication de la demande: 08.09.1993
(73) Titulaire: SOCIETE D'ETUDE EN MECANISATION ET AUTOMATISATION - CIMAT, F-07200 Aubenas (FR)
(72) Inventeur: Gleyze, Jean, F-07200 Aubenas (FR); Zoller, Frédéric, F-07200 Aubenas (FR)
(74) Mandataire: Laurent, Michel

(56) Documents cités:
- DE-A- 3 150 652
- DE-A- 3 923 011
- FR-A- 1 523 534
- US-A- 4 450 400

## Description

La présente invention concerne un perfectionnement apporté aux installations automatisées, qui permettent d'assurer le stockage et/ou la mise à disposition de produits divers (magasins de stockage) et qui, pour leur mise en oeuvre, impliquent l'utilisation de chariots autonomes permettant de limiter au minimum les interventions manuelles.

Elle a trait plus particulièrement à un nouveau type de chariot utilisable sur des installations de stockage, dans lesquelles les chariots peuvent se déplacer à plusieurs niveaux différents selon deux axes X-Y, et qui comportent au moins un ensemble élévateur permettant d'assurer les déplacements selon l'axe vertical Z. Dans de telles installations, les chariots comportent une motorisation et comme ceux utilisés depuis fort longtemps sur les installations transporteuses automatiques sans rail (voir brevet français 1 523 534 qui décrit les caractéristiques du preambule de la revendication 1), les déplacements sont obtenus au moyen d'un moteur électrique alimenté par l'intermédiaire de batteries d'accumulateurs portées par le chariot lui-même. Comme cela ressort du document précité, de tels ensembles comportent un contrôle automatique de charges des batteries d'accumulateurs couplé avec le dispositif de commande, de telle manière que, si la charge des batteries descend au-dessous d'une valeur minimum, l'ensemble rejoint automatiquement une station de charges, également automatique, qu'il quittera de nouveau après recharge de ces batteries pour être réutilisé. Il est évident qu'une telle opération de charge longue à réaliser (plusieurs heures), entraîne une immobilisation du chariot transporteur, augmentant notablement les coûts de fonctionnement. Par suite, pour résoudre cet inconvénient, l'une des solutions proposées consiste à monter les batteries d'accumulateurs de manière amovible sur le chariot afin que l'on puisse substituer à une batterie déchargée un nouveau jeu de batterie rechargée. Une telle opération est cependant délicate à réaliser compte tenu du poids des batteries d'accumulateurs (plusieurs centaines de kilos).

Or on a trouvé, et c'est ce qui fait l'objet de la présente invention telle que définie par la revendication 1, un perfectionnement apporté à de telles installations, qui permet de résoudre ces problèmes par le fait qu'il permet de réaliser automatiquement le remplacement des batteries déchargées montées sur le chariot par de nouvelles batteries, ainsi que la mise en place automatique de la batterie déchargée sur un ensemble de charge disposé à poste fixe à l'intérieur du magasin de stockage, ce qui non seulement permet d'éliminer toute intervention manuelle, mais également autorise une utilisation pratiquement à 100 % du chariot qui n'est jamais hors service, si ce n'est pendant la courte phase de remplacement des batteries.

L'invention et les avantages qu'elle apporte seront cependant mieux compris grâce à l'exemple de réalisation donné ci-après à titre indicatif mais non limitatif, et qui est illustré par les schémas annexés dans lesquels :

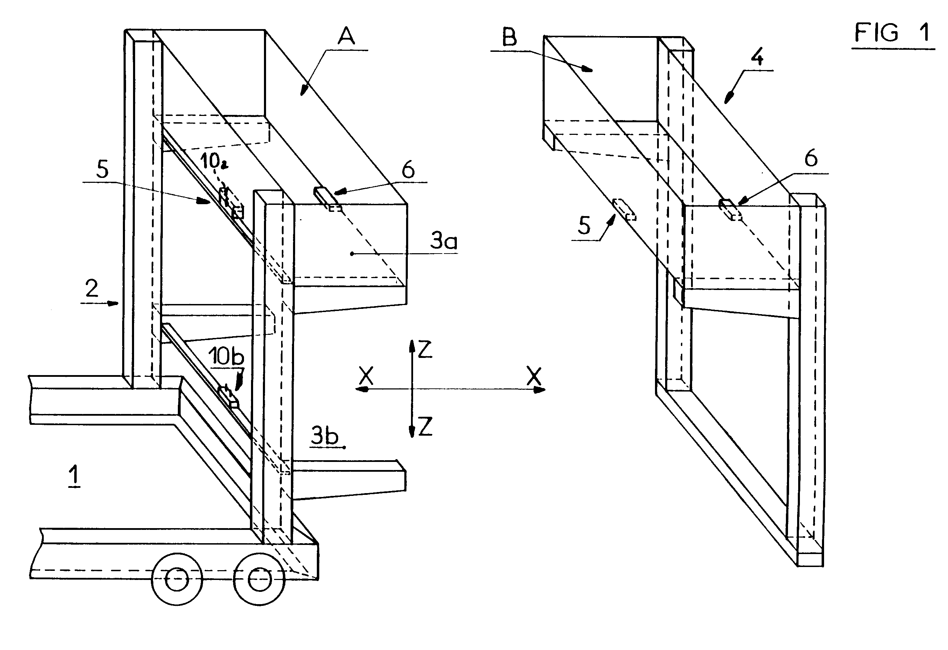

- la figure 1 est une vue schématique d'ensembles illustrant une installation perfectionnée réalisée conformément à l'invention ;

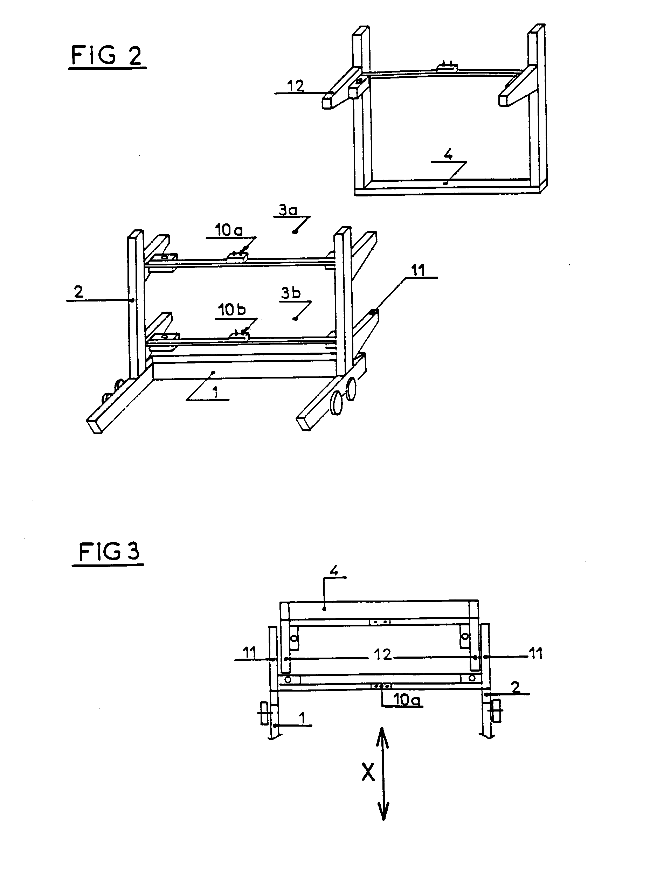

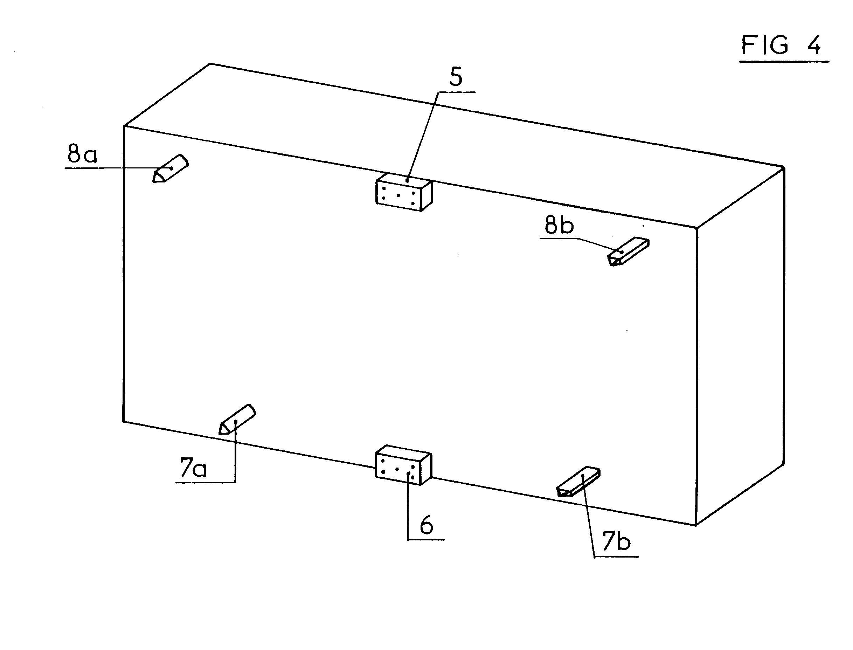

- les figures 2, 3 et 4 sont des vues de détail schématiques montrant en perspective et vue de dessus (figures 2 et 3) la structure du chariot autonome et du chargeur de batterie utilisé sur une installation conforme à l'invention et la manière dont est réalisé un bloc de batterie pouvant être utilisé sur une telle installation (figure 4) ;

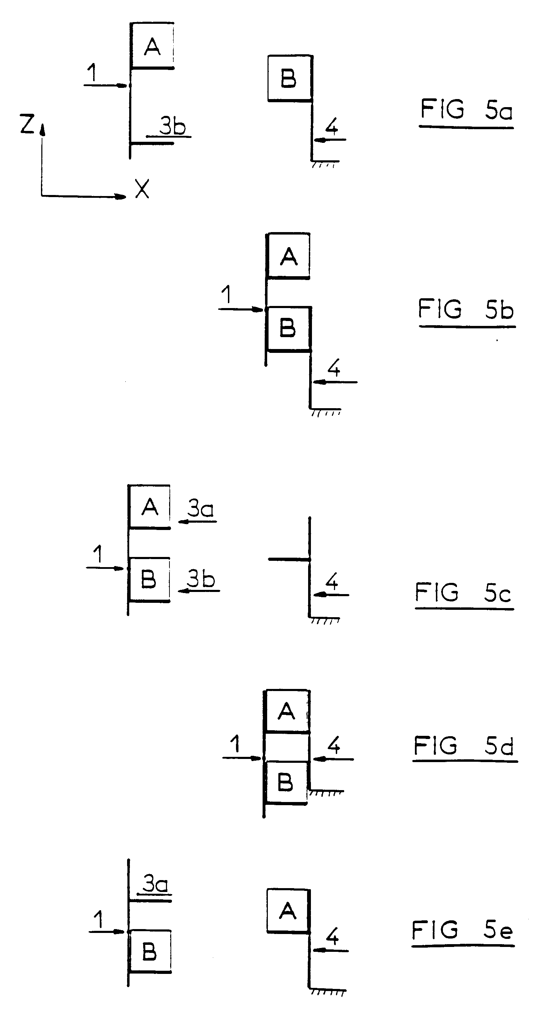

- les figures 5a à 5e sont des schémas de principe illustrant les différents mouvements accomplis entre le chariot autonome et le chargeur de batterie lors d'une opération de transfert (remplacement d'une batterie déchargée par une batterie chargée et mise en place de la batterie déchargée sur l'ensemble de charge).

Comme dit précédemment, l'invention porte sur un perfectionnement apporté aux installations qui permettent la manutention de produits à l'intérieur des zones de stockage d'un magasin automatisé, du type comprenant une pluralité de niveaux superposés, chaque niveau étant subdivisé en couloirs parallèles de part et d'autre desquels sont disposées des rangées de casiers, alvéoles, dont les dimensions sont fonction des produits à stocker, et dans lesquels la mise en place et le prélèvement des produits à l'intérieur des zones de stockage est réalisé par l'intermédiaire de chariots autonomes amenés à un niveau prédéterminé par l'intermédiaire d'au moins un ensemble élévateur.

Ainsi que cela ressort des schémas annexés, conformément à l'invention, pour d'une part assurer l'alimentation en courant électrique du moteur du chariot autonome par l'intermédiaire de batteries portées par ledit chariot et, d'autre part, pour réaliser de manière automatique le remplacement des batteries déchargées montées sur le chariot par de nouvelles batteries, ainsi que la mise en place automatique de la batterie déchargée sur un ensemble de charge disposé à poste fixe à l'intérieur du magasin de stockage, on utilise la combinaison des moyens spécifiques suivants illustrés par les figures 1 à 4.

Tout d'abord, le chariot (1), représenté partiellement aux figures 1, 2 et 3 comporte, à l'une de ses extrémités, avant par exemple, monté en porte-à-faux, un portique, désigné par la référence générale (2), définissant deux emplacements (3a,3b) superposés, pouvant recevoir chacun un bloc de batterie (A), chaque emplacement comportant des moyens de connexion (10a,10b) avec lesdites batteries permettant d'assurer l'alimentation du moteur électrique dudit chariot.

Les moyens permettant de recharger une batterie lorsque sa charge a atteint un seul minimum déterminé, sont constitués par un poste fixe de charge, désigné par la référence générale (4), et qui permet de maintenir le bloc de batterie (B) en charge horizontalement et en hauteur par rapport au sol.

Le bloc de batterie lui-même, montré en perspective vu de dessous à la figure 4 comporte, quant à lui, sur sa face inférieure, deux systèmes de connexion (5,6) permutables, l'un (5) raccordable au circuit d'alimentation du moteur électrique du chariot (1), l'autre (6) à la source électrique de charge du poste fixe (4). Par ailleurs, sur la face inférieure du bloc de batterie, sont avantageusement prévus des moyens de centrage (7a,7b) et (8a,8b) permettant de positionner parfaitement les blocs de batterie sur leur support respectif (soit fourches (11) du chariot (9), soit fourches (12) sur le poste fixe de charge (4)), de manière à obtenir une parfaite coïncidence des raccords électriques entre eux.

Les différents mouvements permettant de réaliser le transfert d'un bloc de batterie déchargée (A) portée par le chariot sur le chargeur (4) et inversement, la mise en place d'un bloc de batterie chargée (B) sur le chariot (1), sont obtenus d'une part par les déplacements du chariot (1) lui-même (mouvement horizontal X) et, d'autre part, par le système élévateur du magasin lui-même (mouvement vertical Z). En fonction de la structure des magasins, si celui-ci ne comporte qu'un seul ensemble élévateur disposé à poste fixe, le poste fixe de charge (4) sera alors monté en regard dudit ensemble élévateur et, lorsque l'ensemble élévateur peut se déplacer le long d'une travée, il sera alors disposé dans le prolongement de l'une d'elles, de telle sorte que ledit ensemble élévateur puisse être immobilisé en regard du poste fixe de charge (4).

Les schémas 5a à 5e illustrent le processus de transfert permettant l'échange des batteries entre le chariot (1) et le poste de charge (4). Si l'on prend comme hypothèse que le bloc de batterie montée sur le chariot est le bloc (A) montée sur le poste supérieur (3a), la mise en place du bloc (B) sur le poste inférieur (3b) du chariot, est réalisée de la manière suivante.

Tout d'abord, dans un premier temps, on amène le chariot (1) sur l'ensemble élévateur (non représenté aux figures annexées), de manière à ce qu'il soit amené en regard du poste de charge (4). Lorsque le positionnement est réalisé, l'ensemble élévateur soulève le chariot de manière à amener les éléments support du poste (3b) à un niveau légèrement inférieur au bloc de batterie (B). Le moteur du chariot est alors actionné pour amener les fourches support dans la position représentée à la figure 5b (ou figure 3). Après immobilisation, l'ensemble élévateur remonte légèrement, ce qui permet de soulever le bloc (B) du poste fixe de charge (4) et de le mettre en place sur les éléments porteurs (3b). On réalise alors la connexion entre ce bloc (B) et l'élément correspondant du chariot, l'alimentation du bloc de batterie (A) étant automatiquement permutée. Les deux blocs (A,B) étant disposés sur le chariot, l'ensemble élévateur effectue un léger mouvement vertical, puis le chariot un mouvement de recul lui pemettant de venir dans la position représentée à la figure 5c, le poste fixe de charge (4) ne supportant alors aucune batterie.

On procède alors à la phase de transfert du bloc déchargé (A) sur le poste fixe de charge (4) en provoquant la descente de l'ensemble élévateur, l'avance du chariot jusqu'au poste fixe de charge (4) et une nouvelle descente de l'ensemble élévateur pour positionner sur l'élément support du poste fixe (4) le bloc de batterie déchargée (A) qui se trouve alors automatiquement connectée à la source d'alimentation électrique permettant de le recharger. Le chariot se trouve alors ramené dans la position représentée à la figure 5e et peut être réutilisé pour un fonctionnement normal sur l'installation de stockage.

Grâce à un ensemble d'une telle conception, il est donc possible de réaliser, sans aucune intervention manuelle, les opérations de remplacement de batterie et de mise en charge, et ce en ayant un temps d'immobilisation minimal.

## Revendications

1. Installation permettant la manutention de produits à l'intérieur des zones de stockage d'un magasin automatisé, du type comprenant une pluralité de niveaux superposés, chaque niveau étant subdivisé en couloirs parallèles de part et d'autre desquels sont disposées des rangées de casiers ou alvéoles, dont les dimensions sont fonction des produits à stocker, la mise en place et le prélèvement des produits à l'intérieur des zones de stockage étant réalisés par l'intermédiaire de chariots autonomes, lesdits chariots étant amenés à un niveau prédéterminé par l'intermédiaire d'au moins un ensemble élévateur, les déplacements de chaque chariot autonome (1) à l'intérieur des zones de stockage, étant obtenus au moyen d'un moteur électrique alimenté par l'intermédiaire de batteries d'accumulateurs (A) portés par le chariot lui-même, caractérisée en ce que :
- lesdites batteries (A) sont montées en bout du chariot (1) sur un portique fixe (2) comportant deux emplacements superposés (3a,3b) pouvant recevoir chacun un bloc de batterie et équipés de moyens de connexion (10a,10b) permettant d'assurer l'alimentation du moteur électrique dudit chariot ;
- les moyens permettant de recharger un bloc de batterie lorsque sa charge atteint un seuil minimum prédéterminé, sont constitués par un poste fixe de charge (4) permettant de maintenir ledit bloc de batteries en charge horizontalement et en hauteur par rapport au sol ;
- le bloc de batterie comporte deux systèmes de connexion (5,6) permutables, l'un (5) raccordable au circuit d'alimentation du moteur électrique du chariot (1), l'autre (6) au poste fixe de charge (4) ;
- les mouvements permettant de réaliser le transfert d'un bloc de batterie déchargée (A) sur le poste fixe de charge (4) et inversement, sont obtenus d'une part par les déplacements horizontal (X) du chariot (1) lui-même et, d'autre part, par l'ensemble élévateur du magasin lui-même pour le mouvement vertical (Z) le poste fixe de charge (4) étant disposé en regard de cet ensemble élévateur lors de l'opération de transfert.

## Claims

1. Device for moving products within storage areas of an automated warehouse, of the type comprising a plurality of superimposed levels, each level being subdivided into parallel corridors on either side of which are disposed ranks of bins or pigeon holes, whose dimensions are a function of the products to be stored, replacement and removal of the products within the storage areas being effected through the intermediary of autonomous carriages, the said carriages being brought to a predetermined level through the intermediary of at least one elevator assembly, the movements of each autonomous carriage (1) within the storage areas, being obtained by means of an electric motor powered through the intermediary of accumulator batteries (A) carried by the carriage itself, characterised in that:
- the said batteries (A) are mounted at the end of the carriage (1) on a fixed gantry (2) comprising two superimposed emplacements (3a, 3b), each being able to accommodate a battery block and equipped with connection means (10a, 10b) enabling the supply of the electric motor of said carriage;
- the means enabling recharging of a battery block when its charge reaches a predetermined minimum threshold, are constituted by a fixed charging station (4) enabling the said block of batteries on charge to be kept horizontal and at a height above ground level;
- the battery block comprises two interchangeable connection systems (5, 6), one (5), being connectable to the supply circuit of the electric motor of the carriage (1), the other (6) to the fixed charging station (4);
- the movements enabling transfer of a discharged battery block (A) to the fixed charging station (4) and vice versa are obtained on the one hand by horizontal movements (X) of the carriage (1) itself, and on the other hand, by the elevator assembly of the warehouse itself for the vertical movement (Z), the fixed charging station (4) being disposed opposite this elevator assembly during the transfer operation.

## Patentansprüche

1. Vorrichtung zum Befördern von Produkten im Inneren von Aufbewahrungszonen eines automatisierten Lagers mit einer Vielzahl von übereinanderliegenden Ebenen, wobei jede Ebene in parallele Gänge unterteilt ist, auf deren beiden Seiten Reihen von Kästen oder Lagerplätzen angeordnet sind, deren Abmessungen von den aufzubewahrenden Produkten abhängen, wobei das Hineinsetzen und das Entnehmen von Produkten im Inneren der Aufbewahrungszonen durch führerlose Wagen realisiert ist, die durch wenigstens eine Hubanordnung auf eine vorbestimmte Ebene gebracht werden, wobei die Bewegungen jedes führerlosen Wagens (1) im Inneren der Aufbewahrungszonen mittels eines Elektromotors erreicht wird, der durch Akkumulatorbatterien (A) gespeist wird, die von dem Wagen selbst getragen werden,
dadurch gekennzeichnet, daß
- die Batterien an einem Ende des Wagens (1) auf einem feststehenden Säulenrahmen (2) montiert sind, der zwei übereinander angeordnete Standplätze (3a, 3b) aufweist, die jeweils einen Batterieblock aufnehmen können und mit Verbindungsmitteln (10a, 10b) ausgestattet sind, die die Versorgung des Elektromotors des Wagens gewährleisten können;
- die Mittel, die das Wiederaufladen einer Batterie gestatten, wenn deren Ladung eine vorbestimmte minimale Schwelle erreicht hat, durch eine feststehende Ladestation (4) gebildet sind, die es gestattet, daß die Batterieblöcke beim Laden horizontal und auf einer Höhe im Verhältnis zum Boden gehalten werden;
- der Batterieblock zwei austauschbare Verbindungssysteme (5, 6) aufweist, von denen eines mit einer Speiseschaltung des Elektromotors des Wagens (1) verbindbar ist, und von denen das andere (6) mit der feststehenden Ladestation (4) verbindbar ist;
- die Bewegungen, die die Realisierung des Umsetzens eines entladenen Batterieblocks (A) auf die feststehende Ladestation (4) und umgekehrt gestatten, einerseits durch horizontale Versetzungen des Wagens (1) selbst und andererseits durch die Hubanordnung des Lagers selbst für eine Vertikalbewegung (Z) erreicht werden, wobei die feststehende Ladestation (4) bei dem Umsetzungsvorgang gegenüber der Hubanordnung angeordnet ist.
